(19) **Europäisches Patentamt**

**European Patent Office**

**Office européen des brevets**

(11) **EP 0 987 554 B1**

(12) **FASCICULE DE BREVET EUROPEEN**

(45) Date de publication et mention
de la délivrance du brevet:
**28.12.2005 Bulletin 2005/52**

(51) Int Cl.⁷: **G01P 21/00**, G01H 11/08,
G01L 23/22

(21) Numéro de dépôt: **98810920.3**

(22) Date de dépôt: **15.09.1998**

(54) **Circuit de mesure**

Mess-Schaltkreis

Measuring circuit

(84) Etats contractants désignés:
**BE CH DE DK ES FR GB IT LI NL**

(43) Date de publication de la demande:
**22.03.2000 Bulletin 2000/12**

(73) Titulaire: **VIBRO-METER SA**
**CH-1700 Fribourg (CH)**

(72) Inventeur: **Broillet, Bernard**
**1721 Misery (CH)**

(74) Mandataire:
**AMMANN PATENTANWÄLTE AG BERN**
**Schwarztorstrasse 31**
**3001 Bern (CH)**

(56) Documents cités:
**WO-A-95/06259          CH-A- 658 908**
**GB-A- 2 253 487          US-A- 5 070 843**

## Description

La présente invention concerne un circuit de mesure selon le préambule de la revendication 1.

Un tel circuit est connu du brevet suisse no. 658 908. Ce circuit a pour but par exemple de détecter les vibrations d'une machine tournante qui peut être un moteur d'avion ou toute autre structure vibrante. Il permet d'évaluer la qualité du circuit, c'est-à-dire de déceler des défauts tels qu'interruptions, court-circuits, mauvaise isolation, liaison intermittente aussi bien au niveau du capteur qu'à celui de la transmission. En plus, il est aussi possible de détecter des influences parasites extérieures qui sont produites par un couplage électromagnétique, un couplage électrostatique ou par une boucle de terre. De manière générale, une ligne de transmission entre le transducteur et le circuit de mesure peut être interrompue par un ou plusieurs connecteurs au passage de parois ou de cloisons disposées entre le transducteur piézo-électrique et le dispositif de mesure des vibrations ou pressions.

Malgré les possibilités avantageuses susmentionnées le circuit connu souffre de certains désavantages. Les signaux de test respectivement les signaux de défaut dépendent de la marche du dispositif, par exemple du moteur surveillé qui produit par sa vibration le signal de test et de mesure dans le transducteur. Cette nécessité est particulièrement gênante par exemple pour la surveillance d'un moteur d'avion ou d'une grande machine comme une turbine à gaz ou à vapeur où une mise en marche est nécessaire pour obtenir un résultat de test.

La publication US-5,070,843 a trait à un capteur de vibration dans un moteur à combustion interne. Pour détecter un défaut du capteur, un générateur de courant alternatif est connecté en temps de non-utilisation du capteur à la ligne du signal du capteur. La fréquence du signal du générateur est choisie égale à la fréquence propre du capteur, le voltage du signal est mesuré et l'état du capteur est dérivé de son amplitude. Puisque ce signal d'essai a la même polarité que le signal du capteur et est fourni par la même ligne que ce signal, le signal d'essai ne peut pas être distingué du signal du capteur, et la procédure d'essai ne peut être effectuée qu'au cours de périodes où le capteur ne produit pas un signal ou ne produit qu'un signal à amplitude négligeable. Aussi, le générateur n'est-il connecté aux lignes de signal que pendant une phase d'essai.

Similairement, selon le document GB-A-2253487, qui porte sur un capteur d'accélération pour détecter le cognement d'un moteur, la ligne de connexion du capteur est temporairement connectée à un arrangement d'essai et en même temps séparée du système de détection du cognement. Evidement, pendant un essai, le système du détection de cognement est hors fonction.

Le but de la présente invention est de permettre une surveillance complète non seulement pendant la marche mais aussi lors de l'arrêt de l'objet à mesurer et à tester. Ce but est atteint par les mesures selon la revendication 1. Par l'injection d'un signal auxiliaire "artificiel" on simule un bruit en mode commun connu qu'on utilise pour tester la chaîne de mesure. En plus, il en résulte les avantages suivants:

- Le signal de test auxiliaire est indépendant de l'amplitude et de la fréquence de vibration,
- les paramètres tels que fréquence ou amplitude sont prévisibles,
- la présence du transducteur peut être détectée.

L'invention va être décrite ci-après à titre d'exemple et à l'aide des dessins en annexe dans lesquels:

La figure 1     est une vue schématique d'un circuit de mesure avec transducteur piézo-électrique,
la figure 2     montre les signaux aux bornes du transducteur respectivement aux entrées des amplificateurs S1 et S2, et
la figure 3     illustre les détails d'un transducteur selon l'invention.

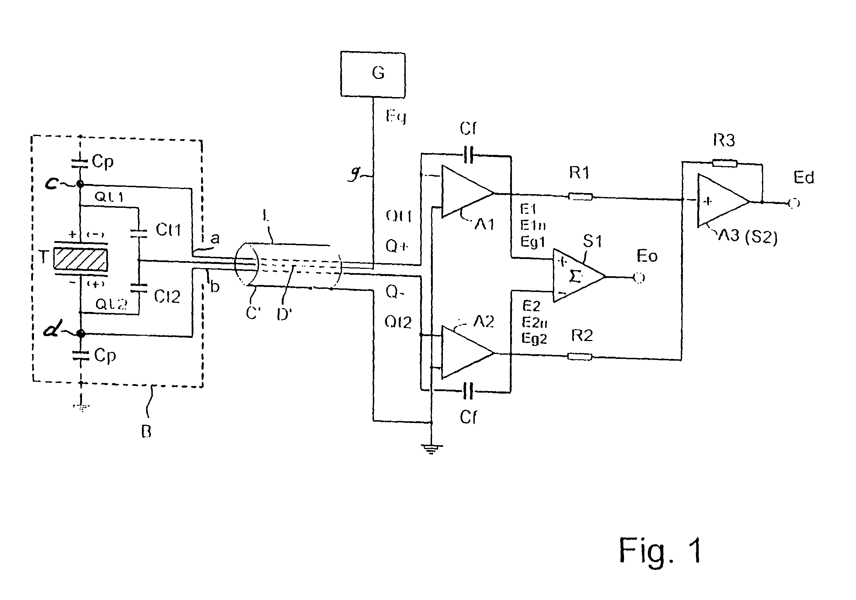

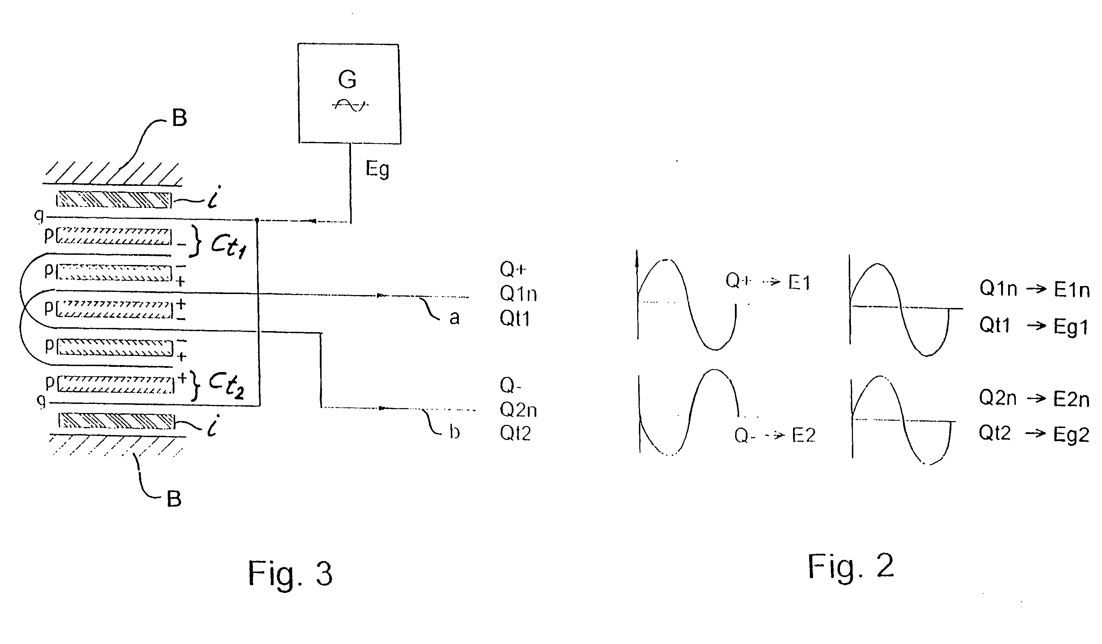

La figure 1 montre schématiquement un circuit de mesure selon l'invention. Un transducteur piézo-électrique T est relié de manière symétrique aux deux fils conducteurs a et b d'une ligne de transmission symétrique blindée L. Le transducteur T est enfermé dans une enceinte blindée B qui peut être reliée électriquement au blindage de la ligne de transmission ou câble L. A leur sortie du câble, les conducteurs a et b sont reliés respectivement à deux amplificateurs de charge A1 et A2 pourvus chacun d'un condensateur de contre-réaction Cf. Les sorties des amplificateurs A1 et A2 sont reliées à un amplificateur de mesure ou sommateur S1 délivrant une tension de sortie Eo. Le transducteur T qui est destiné à mesurer les vibrations d'un moteur, par exemple d'avion ou de machine-outil, etc. (non représenté) sur lequel il est monté, a une sensibilité exprimée en pC/g (picocoulomb/g). Pour une accélération g donnée, il délivre des charges Q+ et Q- en principe de même valeur mais de polarité opposée à l'entrée des amplificateurs de charge A1 et A2 qui délivrent à leur sortie des tensions E1 et E2 proportionnelles aux charges mais en opposition de phase (Fig. 2). Ces tensions sont données par les relations:

$$E1 = Q+/Cf \text{ et } E2 = Q-/Cf$$

et la tension Eo de sortie du sommateur S1 est donnée par

$$Eo = E1 - E2 = 2Q/Cf, \text{ si } E2 = -E1.$$

En admettant par exemple une sensibilité du transducteur de 50 pC/g, une accélération de pointe de 1g et Cf de valeur 1 nF, les charges Q+ et Q- ont chacune une valeur de pointe de 50 pC et la relation ci-dessus montre que Eo = 0,1V de pointe.

Le circuit de la figure 1 permet donc de mesurer les vibrations du dispositif sur lequel est monté le transducteur. Toutefois, pour évaluer des défauts de qualité du transducteur ou de la ligne de transmission, ou même du dispositif de mesure lui-même, tels qu'interruptions, court-circuits, mauvaise isolation, contact intermittent ainsi que des signaux parasites induits de l'extérieur dans le circuit de mesure, il est avantageux et nécessaire non seulement de traiter les signaux E1 et E2 en mode différentiel mais aussi en mode commun. Dans ce but, on prévoit un amplificateur de défaut A3 qui est aussi un sommateur S2, comme indiqué en figure 1.

L'amplificateur de défaut A3 délivre un signal de défaut Ed, lequel représente la somme des signaux appliqués a son entrée.

Dans le circuit représenté à la figure 1, on a tenu compte du fait que des signaux parasites E1n et E2n peuvent être superposés aux signaux utiles E1 et E2. Comme montré par la figure 3, les charges Q1n et Q2n correspondantes aux signaux parasites E1n et E2n sont aussi présentes sur les fils conducteurs a et b respectivement.

Comme indiqué en figure 2, laquelle illustre également les signaux E1 et E2, les signaux parasites E1n et E2n sont induits avec la même phase sur chacun des fils conducteurs a et b de la ligne de transmission L. Les flèches utilisées dans la représentation de signaux à la figure 2 p. ex. entre Q+ et E1 signifient "cause" ou "donne lieu à".

Pour effectuer un test pendant la marche ou l'arrêt de la machine surveillée par le transducteur, respectivement le circuit de mesure, on prévoit un générateur auxiliaire G dont le signal de sortie Eg de fréquence convenable qui diffère de la fréquence de mesure est alimenté par un fil conducteur D' du câble L au transducteur T où le signal est transmis par des capacités d'injection Ct1 et Ct2 de même valeur aux bornes c et d du transducteur. De préférence, les capacités Ct1 et Ct2 sont intégrées dans le capteur T selon la Fig. 3. Le générateur G alimente deux électrodes g, chacune entre une couche isolante extérieure i et une couche en matière piézo-électrique p du transducteur. Comme montré par la figure 3, un signal alternatif auxiliaire de même phase Qt1, Qt2 est ainsi transmis sur les bornes c et d du transducteur. Le signal Eg1 à la sortie de l'amplificateur de charge A1 correspond au signal Qt1. Le signal Eg2 à la sortie de l'amplificateur de charge A2 correspond au signal Qt2.

Dans le cas général, les signaux de sortie Eo et Ed sont donnés par les relations suivantes:

$$Eo = |E1| + |E2| + \Delta En + \Delta Eg = 2Q/Cf + \Delta En + \Delta Eg \qquad 1)$$

$$Ed = \Delta E + |E1n| + |E2n| + |Eg1| + |Eg2| \qquad 2)$$

ou

$$Ed = |E1n| + |E2n| + |Eg1| + |Eg2| \qquad 2')$$

avec

$$\Delta En = |E1n| - |E2n|$$

$$\Delta E = |E1| - |E2|$$

$$\Delta Eg = |Eg1| - |Eg2|$$

$$Qt1 = Eg \times Ct1$$

$$Qt2 = Eg \times Ct2$$

$$Ct1 \cong Ct2$$

L'équation 2) est valable si la machine surveillée est en marche tandis que l'équation 2') est valable si la machine surveillée est en arrêt.

Les relations 1), 2) et 2') ci-dessus permettent d'évaluer la qualité du circuit de mesure.

Dans le cas normal, c'est-à-dire si tous les éléments du circuit fonctionnent correctement, les signaux de sortie Eo et Ed sont donnés par les relations 1), respectivement 2), 2'), et le signal Eo est proportionnel à l'intensité des vibrations du moteur.

En cas d'un court-circuit, soit dans le transducteur, soit le long de la ligne de transmission les signaux Eo et Ed sont 0. Si le court-circuit existe entre une des bornes c ou d et le boîtier B ou entre un point de la ligne a ou la ligne b et le blindage C' du câble, un des signaux d'entrée du dispositif d'évaluation est 0 et les signaux de mesure Eo et de défaut Ed sont égaux et en principe égaux à la moitié de la valeur du signal Eo dans le cas normal.

Dans le cas d'une interruption dans le transducteur ou dans la ligne à proximité du transducteur, l'amplitude des signaux Eo et Ed dépend de l'endroit où se trouve la coupure, et ceci par le fait que le courant doit se refermer par la capacité de couplage entre le blindage (enceinte) du transducteur et le blindage du câble L. Ce qui précède montre que la connaissance des signaux Eo et Ed peut fournir, au moins en théorie, des informations sur l'endroit de la coupure, entre le transducteur et le dispositif de détection.

Dans le cas de mauvaise isolation du transducteur ou de la ligne, l'amplitude du signal Eo sera intermédiaire entre 0 et 2Q/Cf. En cas de liaison intermittente, les amplitudes des signaux Eo et Ed sont fonction de la durée de l'interruption de la liaison et de sa récurrence.

Examinons maintenant la détection de signaux parasites (noise) induits de l'extérieur dans le circuit de mesure. La première de ces influences est produite par ce que l'on appelle une boucle de masse (ground loop) dans le cas où la masse de la machine est reliée à la masse de l'électronique. Un courant circulant dans cette boucle produit par l'intermédiaire des capacités parasites Cp, qui peuvent être différentes entre elles, un signal parasite dans chacun des fils conducteurs de la ligne de transmission. Ces signaux sont en phase et leur somme apparaît à la sortie Ed, tandis que leur différence affecte la sortie Eo. Cet effet parasite peut donc être détecté.

Une autre influence est celle produite par couplage électromagnétique (electromagnetic noise) . Dans ce cas, un courant alternatif de forte intensité circule dans un conducteur voisin de la ligne de transmission L et parallèlement à celle-ci. Malgré le blindage de la ligne, ce courant peut induire dans chacun des fils conducteurs de celle-ci une tension parasite E1n et E2n, ces tensions sont en phase mais peuvent être d'intensités différentes. Selon les relations 1) et 2) mentionnées plus haut, la différence de valeurs absolues de l'influence résultante de ces tensions apparaît à la sortie Eo et leur somme à la sortie Ed. En relation avec leurs fréquences, elles peuvent donc être détectées.

Enfin, il existe encore une influence capacitive (electrostatic noise) produite par exemple par les capacités entre des contacts d'un connecteur voisins de ceux qui dans ce connecteur correspondent aux conducteurs a et b de la ligne de transmission, lors de la traversée d'une cloison. A travers les capacités parasites, des tensions induites parasites peuvent exister à l'entrée du dispositif de mesure. Comme précédemment, ces tensions peuvent être détectées par les tensions Eo et Ed mesurées à la fréquence des tensions perturbatrices.

De manière générale, le circuit de mesure selon l'invention permet, par l'évaluation des signaux Eo et Ed, de détecter des défauts tels que court-circuits, interruptions, etc., aussi bien dans le transducteur que dans la ligne de transmission, ou même dans le dispositif de mesure lui-même, ainsi que la détection des influences parasites venant de l'extérieur.

Le schéma du dispositif de mesure comprenant les éléments A1, A2, S1 et A3 (S2) est particulièrement simple. Pour la mise en oeuvre pratique du circuit de mesure, on peut prévoir que les signaux de mesure Eo et de défaut Ed, éventuellement après filtrage des composants de fréquences indésirables, et après redressement et digitalisation, sont utilisés dans un algorithme adéquat permettant de délivrer des indications sur la qualité du circuit de mesure.

Dans les figures décrites ci-dessus, les amplificateurs de charge A1 et A2 ont été représentés comme faisant partie du dispositif de mesure selon l'invention. Ceci n'est toutefois pas une obligation et ces amplificateurs peuvent sans autre être montés dans l'enceinte B de blindage de celui-ci. Dans ce cas, ce ne sont plus les charges Q+ et Q- du transducteur qui constituent les signaux d'entrée du dispositif de mesure mais bien les tensions |E1| + |E1n| + |Eg1| et |E2| + |E2n| + |Eg2|. De même le générateur G peut être intégré dans l'enceinte B du transducteur.

Au lieu des capacités intégrées au transducteur selon Fig. 3, des condensateurs Ct1, Ct2 peuvent être prévus comme indiqué en Fig. 1. La solution selon la Fig. 3 présente l'avantage que la présence ou l'absence du transducteur T est indiqué par la présence, respectivement l'absence, du signal auxiliaire sur les lignes a et b. Ce signal pourrait aussi être généré par excitation électromécanique du transducteur alimenté par le signal de sortie Eg du générateur auxiliaire G. Dans ce cas, les signaux auxiliaires sur les fils conducteurs a et b sont en phase opposée ce qui amène à des informations opposées Ed pour certaines conditions, en particulier l'état normal du circuit.

Au lieu du transducteur piézo-électrique, n'importe quel autre transducteur convenable, p. ex. un transducteur inductif, capacitif, résistif ou électro-optique peut être utilisé avec le circuit électronique décrit ci-devant ou un circuit analogue adapté à la caractéristique spécifique du transducteur.

Pour certaines applications, le signal auxiliaire pourrait être un signal continu (DC).

## Revendications

1. Circuit de mesure comprenant un transducteur relié à un dispositif de mesure par une ligne de transmission, ce transducteur (T) étant branché symétriquement et le dispositif de mesure (A1, A2, A3, S1) effectuant la somme des valeurs des signaux sur les bornes du transducteur (T) pour délivrer un signal de défaut (Ed), et la différence des valeurs des signaux sur les bornes du transducteur (T), le signal de différence étant un signal de mesure (Eo), **caractérisé par** des moyens (G, D, Ct1, Ct2) pour injecter un signal auxiliaire aux bornes du transducteur (T) afin de pouvoir détecter des défauts et des effets parasitaires du transducteur et/ou d'autres parties du circuit.

2. Circuit selon la revendication 1, comprenant une ligne de transmission (L) entre le transducteur (T) et le dispositif de mesure (A1, A2, A3, S1), **caractérisé par** au moins un fil conducteur suplémentaire (D') dans la ligne de transmission alimenté par un générateur (G) dudit signal auxiliaire et accouplé aux bornes du transducteur (T).

3. Circuit selon la revendication 1 ou 2 avec un transducteur piézo-électrique, **caractérisé en ce que** le transducteur (T) comporte des électrodes (g) intégrées dans la pile d'éléments piézo-électriques et alimentées par ledit signal auxiliaire, ce signal étant ainsi transmis par voie capacitive aux bornes du transducteur.

4. Circuit selon l'une des revendications 1 à 3, **caractérisé par** un amplificateur de mesure (S1) effectuant la différence des signaux (E1, E2) délivrés par le transducteur (T).

5. Circuit selon la revendication 4, **caractérisé en ce que**
   l'amplificateur de mesure (S1) amplifie les signaux (E1, E2) délivrés par le transducteur (T) et le signal auxiliaire (Eg1, Eg2), respectivement en mode différentiel, et
   un amplificateur de défaut (S2) amplifie les signaux (E1, E2) délivrés par le transducteur (T) et le signal auxiliaire (Eg1, Eg2), respectivement en mode commun.

## Patentansprüche

1. Messschaltung mit einem über eine Übertragungsleitung mit einer Messvorrichtung verbundenen Wandler, wobei der Wandler (T) symmetrisch angeschlossen ist und die Messvorrichtung (A1, A2, A3, S1) die Summe der Werte der Signale an den Anschlüssen des Wandlers (T) bildet, um ein Fehlersignal (Ed) zu liefern, sowie die Differenz der Werte der Signale an den Anschlüssen des Wandlers (T), wobei das Differenzsignal ein Messsignal (Eo) ist, **gekennzeichnet durch** Mittel (G, D, Ct1, Ct2) zum Einspeisen eines Hilfssignals an den Anschlüssen des Wandlers (T) zur Erkennung von Fehlern und Störwirkungen des Wandlers und/oder anderer Teile der Schaltung.

2. Schaltung nach Anspruch 1, mit einer Übertragungsleitung (L) zwischen dem Wandler (T) und der Messvorrichtung (A1, A2, A3, S1), **gekennzeichnet durch** mindestens einen zusätzlichen Leiter (D') in der Übertragungsleitung, der von einem Generator (G) des genannten Hilfssignals gespeist wird und an die Anschlüsse des Wandlers (T) angeschlossen ist.

3. Schaltung nach Ansprach 1 oder 2 mit einem piezoelektrischen Wandler, **dadurch gekennzeichnet, dass** der Wandler (T) Elektroden (g) aufweist, welche in den Stapel piezoelektrischer Elemente integriert sind und von dem genannten Hilfssignal gespeist werden, wodurch dieses Signal auf kapazitivem Weg zu den Anschlüssen des Wandlers übertragen wird.

4. Schaltung nach einem der Ansprüche 1 bis 3, **gekennzeichnet durch** einen Messverstärker (S1), der die Differenz der vom Wandler (T) gelieferten Signale (E1, E2) bildet.

**5.** Schaltung nach Anspruch 4, **dadurch gekennzeichnet, dass**

der Messverstärker (S1) die vom Wandler (T) gelieferten Signale (E1, E2) und das Hilfssignal (Eg1, Eg2) jeweils im Gegentakt verstärkt, und

ein Fehlerverstärker (S2) die vom Wandler (T) gelieferten Signale (E1, E2) und das Hilfssignal (Eg1, Eg2) jeweils im Gleichtakt verstärkt.


**Claims**

**1.** Measuring circuit comprising a transducer connected to a measuring device by a transmission line, the transducer (T) being connected symmetrically and the measuring device (A1, A2, A3, S1) forming the sum of the values of the signals on the terminals of the transducer (T) in order to deliver a failure signal (Ed), and the difference of the values of the signals on the terminals of the transducer (T), the differential signal being a measuring signal (Eo), **characterised by** means (G, D, Ct1, Ct2) for injecting an auxiliary signal at the terminals of the transducer (T) in order to enable the detection of failures and of noise effects of the transducer and/or other parts of the circuit.

**2.** Circuit according to claim 1, including a transmission line (L) between the transducer (T) and the measuring device (A1, A2, A3, S1), **characterised by** at least one additional conductor (D') in the transmission line which is supplied by a generator (G) of said auxiliary signal and connected to the terminals of the transducer (T).

**3.** Circuit according to claim 1 or 2 with a piezoelectric transducer, **characterised in that** the transducer (T) comprises electrodes (g) that are integrated in the stack of piezoelectric elements and supplied with the auxiliary signal, the signal being thus transmitted to the terminals of the transducer by capacitance.

**4.** Circuit according to one of claims 1 to 3, **characterised by** a measuring amplifier (S1) that forms the difference of the signals (E1, E2) delivered by the transducer (T).

**5.** Circuit according to claim 4, **characterised in that**

the measuring amplifier (S1) amplifies the signals (E1, E2) delivered by the transducer (T) and the auxiliary signal (Eg1, Eg2), respectively, in differential mode, and

a failure amplifier (S2) amplifies the signals (E1, E2) delivered by the transducer (T) and the auxiliary signal (Eg1, Eg2), respectively, in common mode.

Fig. 1

7

EP 0 987 554 B1

G

Eg

B

i

q

p

} $Ct_1$

p

p

p

p

} $Ct_2$

q

i

B

Q+
Q1n
Qt1

a

Q-
Q2n
Qt2

b

Fig. 3

$Q+ \rightarrow E1$

$Q- \rightarrow E2$

$Q1n \rightarrow E1n$

$Qt1 \rightarrow Eg1$

$Q2n \rightarrow E2n$

$Qt2 \rightarrow Eg2$

Fig. 2